Europäisches Patentamt

European Patent Office

Office européen des brevets

(19)

(11) Veröffentlichungsnummer: **0 134 457**

**B1**

(12) # EUROPÄISCHE PATENTSCHRIFT

(45) Veröffentlichungstag der Patentschrift:
**13.01.88**

(21) Anmeldenummer: **84107506.2**

(22) Anmeldetag: **28.06.84**

(51) Int. Cl.⁴: **F 01 K 21/00,** F 28 B 9/10,
B 01 D 19/00

(54) **Dampfkraftanlage.**

(30) Priorität: **19.07.83 CH 3943/83**

(43) Veröffentlichungstag der Anmeldung:
**20.03.85 Patentblatt 85/12**

(45) Bekanntmachung des Hinweises auf die Patenterteilung:
**13.01.88 Patentblatt 88/2**

(84) Benannte Vertragsstaaten:
**AT BE CH DE FR IT LI SE**

(56) Entgegenhaltungen:
**BE-A-505 083
CH-A-368 199
FR-A-2 084 906
FR-A-2 229 031
FR-A-2 509 901
US-A-3 872 011**

(73) Patentinhaber: **BBC Brown Boveri AG, CH- 5401
Baden (CH)**

(72) Erfinder: **Brand, Andreas, Blümlisalpstrasse 16a,
CH- 4562 Biberist (CH)**
Erfinder: **Lang, Helmut, Vordere Höhenstrasse 10,
CH- 5430 Wettingen (CH)**

LIBER, STOCKHOLM 1988

EP 0 134 457 B1

## Beschreibung

Die Erfindung betrifft eine Dampfkraftanlage gemäss erstem Teil des Patentanspruchs 1.

Im Speisewasser gelöster Sauerstoff, gelöstes Kupfer sowie weitere vom Speisewasser mitgeführte Korrosionsprodukte wurden in jüngster Zeit als die Förderer der Korrosion in Dampferzeugern von Druckwasserreaktor-Anlagen identifiziert. Daher sind in jüngster Zeit grosse Bestrebungen im Gange, den Sauerstoffgehalt im Speisewasser möglichst tief zu halten, gelöstes Kupfer durch Ersatz aller Rohre aus Kupferlegierungen aus dem Speisewasserkreislauf zu eliminieren und Korrosionsprodukte vor dem Dampferzeuger auszuscheiden. Dies umso mehr, als der Ersatz der Dampferzeuger für ein Kraftwerk der 1000 MW-Klasse zu Kosten von ca. 100 Mio. $ führt. Eine Reduktion des Sauerstoffgehaltes im Speisewasser vermindert zudem die Korrosion des Speisewasserstranges und der Vorwärmer.

Sauerstoff wird im Speisewasser resp. im Kondensat gelöst, wenn Luft mit dem Wasser in Berührung kommt. Dies ist z. B. der Fall:

- Beim Kaltstart einer Anlage, da vor dem Füllen mit Kondensat alle Anlageteile unter Luftdruck stehen, und durch die Anfahrevakuierung nicht alle Luft aus dem Speisewasser/Dampfkreislauf entfernt werden kann;

- bei Schwachlastbetrieb, da die Absaugekapazität der Vakuumpumpen für die einfallende Luft aus wirtschaftlichen Erwägungen und aus Gründen der Realisierbarkeit nicht so gross gewählt werden kann, dass alle Teile des Kondensatorbündels ausreichend mit Dampf gespült werden;

- bei normalem Lastbetrieb, weil trotz ausreichender Absaugekapazität die Luftkonzentration gegen das Ende der Kondensation, d.h. gegen den Luftkühler hin, so gross wird, dass messbare Sauerstoffkonzentrationen resultieren;

- weil auch bei normalem Lastbetrieb sehr viele Kondensator-Konzepte Zonen aufweisen, in denen es zu Luftansammlungen kommt;

- weil bei der Zusatzwasseraufbereitung das gereinigte entsalzte Zusatzwasser mit Luft durchwaschen wird, um Kohlendioxyd auszutreiben, und daher zu 100 % mit Luft gesättigt wird. Kupfer wird z. B. bei Anwesenheit von Ammoniak und Sauerstoff aus den benetzten Metalloberflächen von Kupferlegierungen gelöst oder aber durch Erosion oder Korrosion dieser Metalloberflächen ins Speisewasser eingetragen. Korrosionsprodukte sowie weitere Verunreinigungen werden hauptsächlich bei Stillstandsperioden im Speisewasser angesammelt.

Die Fachwelt ist derzeit der Auffassung, dass ein maximaler Sauerstoffgehalt von $\leqslant$ 10 ppb (Teile pro Milliarde) über den gesamten Betriebsbereich der Anlage anstrebenswert ist.

In guten Kondensatoren, d.h. solchen mit nachgewiesener guter Entgasungsfähigkeit, wurden im Lastbereich zwischen 40 bis 100 % Sauerstoffgehalte von $\leqslant$ 5 ppb im Kondensat festgestellt. Das Zusatzwasser wird dabei im Kondensator selbst entgast. Beim Kaltstart einer solchen Anlage und im Schwachlastbetrieb wurden jedoch etwa 70 ppb im Hotwell des Kondensators gemessen. Diese Sauerstoffgehalte müssten weiter abgebaut werden.

Zur Lösung des Korrosionsproblems wurden am EPRI Kondensator-Seminar im Juni 1983 in Orlando, Florida folgende Vorschläge diskutiert:

a) Anfahrentgasung und Schwachlastentgasung durch Versprühung des rezirkulierten Speisewassers über die Rohre des Kondensators. Diese Idee führt erst dann zum Erfolg, wenn die verfügbare Saugerkapazität grösser als die für Sauerstoffgehalte von $\leqslant$ 10 ppb notwendidige Saugerkapazität wird. Dies kann erst bei Lasten ab 30 bis 40 % erwartet werden. Denn Versprühung von aufgewärmtem Kondensat über die Bündel des Kondensators hat erst dann den gewünschten Effekt, wenn auf dem gesamten Weg dieses Kondensates keine Zonen grösserer Luftkonzentrationen durchlaufen werden. Eine Reinigung des gesamten Speisewasserkreislaufes ist durch die Kondensatrezirkulation ebenfalls nicht möglich.

b) Vergrösserung der Saugerkapazität im Schwachlastbereich durch Reduktion des Dampfgehaltes im Saugstrom mittels Mischkondensation. Mischkondensation kann jedoch nur einen Teil des Wasserdampfes aus dem Sauggemisch kondensieren, der Sauger muss immer noch alle Luft absaugen, was im allgemeinen erst bei Kondensatordrücken möglich ist, die über dem "Leerlaufdruck" des Kondensators liegen.

c) Nachentgasung des Kondensates im Hotwell durch Rieseleinbauten oder Dampfeinblasen unter dem Wasserniveau. Diese Idee wird nur dann zum Erfolg führen, wenn genügend Dampf zum Einblasen und Aufwärmen des Kondensates auf Sättigungstemperatur zur Verfügung steht. Dies bedingt eine fremde Dampfquelle beim Kaltstart der Anlage. Bei den Rieselanlagen muss zudem genügend Höhe für die Rieseleinbauten zur Verfügung stehen; für die Dampfeinblasung genügende Kondensatüberdeckung und genügend feine Dampfverteilung im Kondensat. Eine Reinigung des Speisewasserkreislaufes ist auch bei dieser Lösung nicht vorgesehen.

Eine Anlage der eingangs genannten Art - mit nuklearem Dampferzeuger - ist bekannt aus der FR-A-2 509 901. Um Korrosions- und Erosionsprodukte aus dem Speisewasser zu entfernen, ist zum einen ein mechanisches Filter zwischen Niederdruckvorwärmer und Speisewasserbehälter angeordnet. Zum andern ist für das Kondensat aus dem Wasserabscheider, aus dem Zwischenüberhitzer sowie aus den Hochdruckvorwärmern ein elektromagnetisches Filter vorgesehen. Eine Rezirkulationsleitung zweigt zwischen dem höchsten Vorwärmer und dem Dampferzeuger ab und führt in das Kondensatsammelgefäss. Vor dem Anfahren der Anlage wird das Speisewasser über das mechanische Filter und diese Rezirkulationsleitung geführt, um die Verunreinigungen zu entfernen. Hierbei ist die Hauptspeisepumpe abgekoppelt; aus dem Speisewasserbehälter wird das Speisewasser mittels einer Hilfspumpe durch die Hochdruckvorwärmer gefördert. Eine Entgasung des Arbeitsmittels ist bei dieser Anlage nicht vorgesehen.

Bei einer weiteren, aus der FR-A-2 229 031 bekannten thermischen Zentrale wird eine dreifache Entgasung des Arbeitsmittels vorgenommen. Zum einen wird der im Kondensatsammelgefäss angesammelte Dampf über Öffnungen in einem Zwischenboden in den Kondensationsraum geleitet. Dabei wird das an den Öffnungen herabrieselnde Kondensat atomisiert. Zum zweiten werden im Kondensatsammelgefäss Dampfblasen unterhalb der Wasseroberfläche eingeleitet und zum dritten ist das Kondensatsammelgefäss in zwei Kompartimente unterteilt, wobei das vom ersten Kompartiment über ein Wehr ins zweite Kompartiment herabfliessende Wasser mit einem Dampfstrahl hoher Geschwindigkeit behandelt wird. Diese drei Entgasungsverfahren können nur während des Anlagenbetriebes durchgeführt werden, dann also, wenn genügend Dampf für die Entgasung zur Verfügung steht.

Der in den Patentansprüchen gekennzeichneten Erfindung liegt die Aufgabe zugrunde, die insbesondere durch Dampferzeuger-Korrosionsprobleme bedingte wirkungsvolle Kondensat- resp. Speisewasser-Reinigung und Entgasung vorgängig der normalen Betriebslast zu bewerkstelligen. Mit der Erfindung wird damit eine besonders günstige Lösung gefunden, bei welcher

a) im gesamten Betriebsbereich gereinigtes und entgastes Speisewasser bereitgestellt ist;

b) eine thermische Entgasung ohne Zuhilfenahme von separaten Einrichtungen, wie beispielsweise Hilfsdampf möglich ist, so dass vor der Dampferzeugung auf die Bereitstellung von beispielsweise Stopfbüchsendampf oder Konservierungsdampf weitgehend verzichtet werden kann;

c) die Zeit für die Entgasung vor dem Anlagestart auf ein Minimum reduziert werden kann.

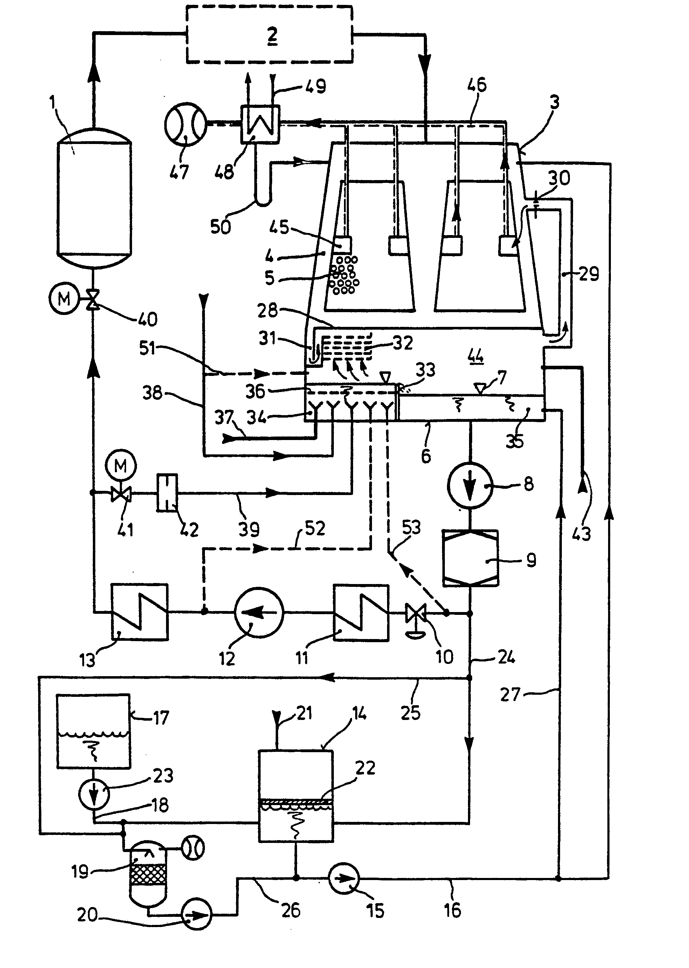

In der Zeichnung ist ein Ausführungsbeispiel der Erfindung schematisch dargestellt. Alle für das Verständnis der Erfindung unwesentlichen Anlageteile, wie beispielsweisae der eigentliche Dampfkreis und die zahlreichen selbstverständlichen Absperrarmaturen in den Leitungen sind nicht gezeigt. Die Strömungsrichtung der diversen Medien ist jeweils mit Pfeilen angegeben.

Mit 1 sei ein nuklear beheizter Dampferzeuger bezeichnet. Im Normalbetrieb wird der darin produzierte Sattdampf in der nicht näher dargestellten Turbinenanlage 2 bis auf Kondensatordruck entspannt. Im Kondensator 3 wird der Dampf im Kondensationsraum 4 an den wassergekühlten Rohrbündeln 5 niedergeschlagen; das Kondensat wird im Kondensatsammelgefäss (Hotwell) 6 aufgefangen. Die Niveaud.eiecke bezeichnen den Wasserspiegel 7 im Hotwell. Eine Kondensatpumpe 8 fördert das Kondensat durch eine Kondensatsreinigungsanlage 9, von wo es über das Hotwell-Regelventil 10 in die Niederdruckvorwärmer 11 gelangt, von denen nur ein Exemplar symbolisch dargestellt ist. Für das vorliegende Beispiel wird ferner angenommen, dass es sich um eine Anlage ohne Mischvorwärmer und somit auch ohne die übliche Mischvorwärmer-Entgaserstufe handelt, eine Anlage demnach, wie sie häufig in den USA anzutreffen ist. Aus den Niederdruckvorwärmern fördert die Speisepumpe 12 das Speisewasser über die Hochdruckvorwärmer 13, von denen auch nur ein Exemplar dargestellt ist, zum Dampferzeuger 1.

Die im Nennbetrieb durch Leckage und Abschlämmung auftretenden Wasserverluste, die in der Grössenordnung von 1 % der Zirkulationsmenge liegen, werden aus einem Kaltkondensatbehälter 14 gedeckt, aus dem sie mittels einer Förderpumpe 15 durch eine Kaltkondensatleitung 16 in den Kondensationsraum 4 des Kondensators eingeführt werden. Es versteht sich, dass auf die Förderpumpe 15 verzichtet werden kann, wenn sich der Behälter 14 in entsprechender Hochlage befindet. Der Behälter 14 bezieht seinen Inhalt aus einem Zusatzwasserbehälter 17 über eine Zusatzwasserleitung 18 mit darin angeordneter Förderpumpe 23. Bei der nicht dargestellten Zusatzwasseraufbereitung wird das entsalzte Wasser mit Luft durchwaschen, um Kohlendioxyd auszutreiben. Das Zusatzwasser ist deshalb in der Regel zu 100 % mit Luft und infolgedessen entsprechend mit Sauerstoff gesättigt. Im immer noch betrachteten Fall des normalen Lastbetriebes der Anlage spielt dies jedoch keine Rolle, da der Kondensationsraum 4 dabei so gut gespült ist, dass die Entgasung dieser geringen Menge Zusatzwasser im Kondensator 3 selbst erfolgen kann.

Selbstverständlich enthält die Kaltwasseranlage einen üblichen Vakuumentgaser 19, der eintrittsseitig mit der Zusatzwasserleitung 18 und austrittsseitig über eine Förderpumpe 20 mit der Kaltkondensatleitung 16 verbunden ist. Über diesen Entgaser 19 kann einerseits das neu in den Kaltkondensatbehälter 14 einzuführende Zusatzwasser aus dem Behälter 17 zunächst entgast werden, und es kann andererseits der Inhalt des Kaltkondensatbehälters 14 erforderlichenfalls umgewälzt und somit entgast werden. Um das einmal entgaste Wasser im Kaltkondensatbehälter 14 vor der Aufnahme von Sauerstoff zu schützen, wird oberhalb des Wasserspiegels eine Inertgasatmosphäre geschaffen. Ein hierfür geeigneter Stickstoffanschluss ist mit 21 bezeichnet. Gegen Sauerstoffeinwirkung bei allfälligem Lufteinbruch kann auch eine schwimmende Abdeckung 22 die Kondensatoberfläche schützen. Letztere Massnahme kann isoliert oder gleichzeitig mit der erstgenannten Massnahme getroffen werden.

Einem dritten Verwendungszweck wird der Vakuumentgaser 19 dann zugeführt, wenn beispielsweise der gesamte Inhalt des Kondensatsammelgefässes zu entgasen ist. Dies kann beispielsweise nach einer Notabschaltung der Fall sein, bei der das Vakuum im Kondensator 3 gebrochen wird. In diesem Fall wird über eine Kondensatrückführung 24, die in der Speiseleitung hinter der Kondensatreinigungsanlage 9 abzweigt und in den Kaltkondensatbehälter 14 mündet, vor dieser Einmündung das zu entgasende Kondensat abgezweigt und über eine Leitung 25 in den Vakuumentgaser 19 geleitet. Nach der Entgasung wird dieses Wasser über die Entgaseraustrittsleitung 26 in die Kaltkondensatleitung 16 gepumpt und von hier aus über eine davon abzweigende, sogenannte Anfahrfüllleitung 27 in das Kondensatsammelgefäss 6 zurückgeführt.

Dieses Kondensatsammelgefäss 6 ist vom Kondensationsraum 4 durch einen Zwischenboden 28 abgetrennt. Beide Räume sind durch eine Dampfausgleichleitung 29, die zum Kondensationsraum 4 hin mit einer Blende 30 versehen ist, miteinander verbunden. Das an den Rohrbündeln 5 entstehende Kondensat sammelt sich zunächst auf dem Zwischenboden 28 und fliesst dann über eine an die Wandung des Kondensators unmittelbar angrenzende, schlitzförmige Kondensatabflussöffnung senkrecht abwärts in ein Siphon 31. Am oberen Ende des aufsteigenden Siphonkanals wird das Kondensat auf Rieseleinbauten 32 geleitet. Diese bestehen aus einer Mehrzahl von mit Abstand übereinander angeordneten gelochten Abtropfplatten. Während des Betriebes wird das von oben nach unten rieselnde Kondensat von aufsteigendem Dampf auf Sättigungstemperatur aufgeheizt. Dieser Dampf kann von einer nicht gezeigten Hilfsturbine oder einer sonstigen Einrichtung herstammen und wird über die Dampfleitung 43 in das Sammelgefäss oberhalb des Wasserspiegels 7 eingeleitet. Das Kondensat sammelt sich am Kondensatorboden, der mittels einer Schikane 33 in zwei Kompartimente unterteilt ist. Dies ist erforderlich, um zum einen strömungsgerechte Zulaufbedingungen zur Kondensatpumpe 8 zu schaffen und zum anderen, um die Niveauregulierung nicht zu beeinträchtigen.

Im linken Kompartiment 34, welches sich unmittelbar unterhalb der Rieseleinbauten 32 befindet, und welches mit einem Überlauf zum rechten Kompartiment 35 ausgestattet ist, befinden sich unterhalb der Wasseroberfläche Einbauten 36 zur Beruhigung des Niveaus. Diese Einbauten dienen unter anderem zur Homogenisierung und Gleichrichtung jener Medien, die von unten in das linke Kompartiment des Sammelgefässes 6 eingeführt werden. Die Einbauten können entweder Schikanen oder perforierte Abdeckbleche sein.

Bei den einzuführenden Medien handelt es sich zum einen um Dampf, welcher in der Anfahrphase und bei schlecht entgasenden Kondensatoren auch beim normalen Lastbetrieb über die Dampfzufuhrleitung 37 eingeblasen wird. Zum andern handelt es sich entweder um ein Inertgas, beispielsweise Stickstoff, welches über die Stickstoffleitung 38 einströmt oder um Speisewasser aus der Speisewasser-Rezirkulationsleitung 39. Als Inertgas wird im vorliegenden Zusammenhang ein solches Gas verstanden, das im Kondensat nur in unbedeutenden Spuren gelöst wird.

Die Rezirkulationsleitung 39 zweigt von der Speiseleitung ab und zwar unmittelbar vor der Dampferzeuger-Isolierarmatur 40. Sie ist mit einem Absperrorgan 41 und einem Drosselorgan 42 versehen, wobei letzteres vorteilhafterweise möglichst nahe an der Abzweigstelle angeordnet ist.

Der freie Raum im Kondensatsammelgefäss 6 zwischen Wasserspiegel 7 und Zwischenboden 28 wird nachstehend als Entgasungskammer 44 bezeichnet.

Innerhalb der Bündel 5 sind die an sich bekannten Luftkühlerzonen 45 untergebracht, aus denen die nicht kondensierbaren Gase zusammen mit einem gewissen Dampfanteil über Entlüftungsleitungen 46 abgezogen werden. Dies geschieht mit der Vakuumpumpe 47. Vor letzterer ist ein zusätzlicher Kondensator 48 in der Entlüftungsleitung angeordnet, der mit Nebenkühlwasser 49 betrieben wird, das vorzugsweise kälter ist als das Hauptkühlwasser für den Kondensator 3. Entwässert wird dieser Zusatzkondensator 48 über ein Siphon 50 in den Hauptkondensator 3.

Das Reinigungs- und Entgasungsverfahren wird nunmehr anhand des Füll- und Anfahrvorgangs der Anlage beschrieben. Es wird dabei angenommen, dass die Anlage vollständig leer sei. Mit der Vakuumpumpe 47 wird die Anlage zunächst evakuiert. Entnommen wird die Füllmenge aus dem Kaltkondensatbehälter 14, dessen Inhalt vorgängig zwecks Ausscheiden von Sauerstoff über den Vakuumentgaser 19 zirkuliert ist. Mittels der Förderpumpe 15 wird das Kondensat über die Kaltkondensatleitung 16 und die Anfahrfüllleitung 27 in das Kondensatsammelgefäss 6 gefördert, von wo es weiter in die Vorwärmerstrasse (8 - 13) fliesst. Vorteilhafterweise wird die ganze Vorwärmerstrasse bis unmittelbar vor die verschlossene Dampferzeuger-Isolierarmatur 40 aufgefüllt. Das Absperrorgan 41 in der Rezirkulationsleitung 39 ist geöffnet. Durch das Auffüllen des Systems mit sauerstofffreiem Kondensat lässt sich einerseits die Zeit für die Entgasung vor dem Anlagenstart verringern, und andererseits Korrosion der Vorwärmerstrasse beim Füllvorgang vermeiden.

Die Kondensatpumpe wälzt nun mit der Kondensatpumpen-Mindestmenge, d. h. etwa 30 % der Nennlastmenge, das Wasser um. Dadurch, dass die gesamte Wassermenge die Kondensatreinigungsanlage 9 wiederholt beaufschlagt, genügen etwa 10 Umläufe, um die Korrosionsprodukte auszuscheiden, die sich im Speisewasserkreislauf vor dem Dampferzeuger insbesondere während der Stillstandperiode der Anlage gebildet und angesammelt haben.

Wenn nun zwar vom Standpunkt der Reinheit das Speisewasser die erforderliche Qualität aufweist, so hat es sich doch während der mehrfachen Zirkulation mit Sauerstoff angereichert, da anlässlich der Anfahrevakuierung nicht alle Luft aus dem Kreislauf entfernt werden kann.

Die erforderliche Entgasung kann nun auf zweierlei Arten erfolgen, die beide in der Zeichnung dargestellt sind: Zum einen kann Inertgas, beispielsweise Stickstoff in das Kondensatsammelgefäss 6 eingeführt werden. Dies geschieht mit Vorteil über die Stickstoffleitung 38, die unterhalb der Wasseroberfläche in das linke Kompartiment 34 des Sammelgefässes 6 mündet. Der Stickstoff steigt durch das Wasser auf und aufgrund des an sich bekannten Diffusionseffektes wird dem Kondensat dabei der Sauerstoff entzogen. Der Stickstoff sammelt sich in der Entgasungskammer 44 und verdrängt dabei jene Luft, die sich noch zwischen Wasseroberfläche 7 und Zwischenboden 28 befindet, durch die Dampfausgleichleitung 29 in den Kondensationsraum 4, aus dem sie über die Entlüftungsleitungen 46 abgezogen wird. Durch diese erste Massnahme kann also in der Entgasungskammer 44 ein eigentlicher sauerstoffarmer Raum geschaffen werden. Letzteres könnte auch geschaffen werden, indem das Inertgas nicht wie eben dargelegt durch das Kondensat geleitet wird, sondern direkt in die Entgasungskammer 44 einströmt, wie dies durch die gestrichelte Stickstoffleitung 51 angedeutet ist. Jedoch geht dadurch der genannte Vorteil der direkten Wasserentgasung verloren.

Die zweite Art ist eine thermische Entgasung innerhalb des Sammelgefässes 6, die darin besteht, durch Energiezufuhr in das Kondensat besonders günstige 8edingungen für die Entgasung zu schaffen. Dabei sollte die Wärmequelle so geschaffen sein, dass kleine Dampfblasen durch das Wasser homogen aufsteigen. Auch bei dieser zweiten Art sind zwei Möglichkeiten in Betracht zu ziehen:

Zunächst die zum Stand der Technik zu zählende Lösung, bei der Hilfsdampf eingeblasen wird. Dies hat aber den bereits eingangs genannten Nachteil zur Folge, dass eine Dampfquelle bereits zu diesem Zeitpunkt, d. h. vor der Aufnahme der Dampferzeugung, zur Verfügung stehen muss. Dieser Dampf wird über die Dampfzufuhrleitung 37 ins Kondensat eingeleitet.

Die zweite Lösung, die der Erfindung zugrunde liegt, sieht vor, ohne besondere Einrichtungen zur Energiezufuhr (beispielsweise Hilfsdampf oder elektrische Heizung) die für die Entgasung benötigte Wärme durch Rezirkulation des Speisewassers zum Sammelgefäss zu gewinnen. Hierzu wird die Speisepumpe 12 in Betrieb genommen. Weiss man, dass bei einer Turbinenanlage in der Grössenordnung von ca. 1000 MW die Speisepumpe 2 MW im Mindestmengenbetrieb aufnimmt und diese zur Gänze in Druck und Wärme umsetzt, so lässt sich unschwer feststellen, dass nach ungefähr 10 Stunden der Kreislauf auf Sättigungstemperatur aufgeheizt ist. Um die Rezirkulationsleitung 39 nicht mit vollem Speisewasserenddruck durch das Kraftwerk ziehen zu müssen, wird der Druck teilweise im Drosselorgan 42 abgebaut. Die Leitung 39 kann somit auf tieferen Druck dimensioniert werden. Selbstverständlich kann auch ein eigentliches Druckbegrenzungssystem, beispielsweise eine Brechplatte oder ein Sicherheitsventil in der Leitung 39 vorgesehen werden. Mit dem verbleibenden Druck wird nun das Sättigungstemperatur aufweisende Kondensat im linken Kompartiment 34 unterhalb des Kondensatspiegels 7 über Düsen oder Lochrohre eingespritzt. Durch den in den Sprühdüsen erfolgenden Druckabbau verdampft ein Teil des eingeführten Kondensates bei geeigneter Temperatur unter Bildung der für die Entgasung erforderlichen kleinen Dampfbläschen. Oberhalb der Wasseroberfläche bildet sich in der Entgasungskammer 44 ebenfalls ein Dampfpolster, welches die bis dahin verbliebene Luft über die Dampfausgleichleitung 29 verdrängt. Besonders vorteilhaft ist es, wenn beide Arten der Entgasung Anwendung finden. Hierzu ist es zweckmässig, zunächst in der Anfangsphase ein Stickstoffpolster in der Entgasungskammer 44 zu schaffen und zwar so lange, wie es zu keiner Dampfbildung aufgrund der thermischen Entgasung kommt.

Zusammen mit der Kondensatorentlüftung wird der über die Ausgleichleitung 29 abströmende Dampf abgezogen und im Zusatzkondensator 48 niedergeschlagen.

Wenn die Speisewasser-Entgasung auf das erforderliche Niveau erfolgt ist, beispielsweise einen Sauerstoffgehalt geringer als 10 ppb aufweist, was durch einfache Messung im oder nach dem Kondensatsammelgefäss 6 nachzuweisen ist, ist die primäre Reinigungs- und Entgasungsphsse damit beendet. Es folgt die Füllung des Dampferzeugers 1 mit anschliessender Dampferzeugung. Die Rezirkulationsleitung 39 ist bei Nichtgebrauch durch starkes Verblocken des Absperrorgans 41 zu verschliessen.

Zwei Vorteile des Verfahrens sind nun erkennbar, nämlich einmal, dass eine Entgasung im Anfahrbetrieb möglich ist, auch wenn die Turbinenstopfbüchsen noch nicht gesperrt sind und zum zweiten, dass als einzige Wärmesenke bis zu diesem Zeitpunkt der mit

Nebenkühlwasser 49 betriebene Zusatzkondensator 48 eingesetzt war, auf das Hauptkühlwasser also verzichtet werden konnte.

Letzteres wird erst dann in Betrieb genommen, wenn es zur Wärmeabfuhr erforderlich ist, was mit der nun beginnenden Phase des Anlagenstarts der Fall ist. Die Hochlaufphase und die hierfür erforderliche Umgehung der Turbine sind erfindungsunwesentlich und konnen im vorliegenden Zusammenhang unberücksichtigt bleiben.

Es wird nunmehr angenommen, dass eine gewisse Teillast gefahren wird. Zur Kondensation wird nunmehr gerade die unbedingt erforderliche Kühlwassermenge zirkulieren lassen. Vorzugsweise wird bis zu einer bestimmten Teillast nur ein Teil, beispielsweise eine Hälfte des Kondensators in Betrieb genommen. In diesem Stadium ist nämlich im Kondensationsraum 4 ein möglichst hoher Druck erwünscht, um die Saugkapazität der Vakuumpumpe 47 voll zu erhalten und auszunützen. Dies bedeutet, dass im Kondensationsraum der einströmende Dampf nicht vollständig auskondensiert, sondern den Raum füllt und hierbei die noch vorhandene Luft verdrängt. Das über die Entlüftungsleitungen 46 abgezogene Luftdampfgemisch durchströmt zunächst den Zusatzkondensator 48, der wie bereits erwähnt mit Nebenkühlwasser 49 betrieben wird, das vorzugsweise von tieferer Temperatur ist als das Hauptkühlwasser. Durch die Reduktion seines Dampfgehaltes im Zusatzkondensator wird die Entlüftungskapazität der Vakuumpumpe wirkungsvoll vergrössert. Dies ist insbesondere deshalb vorteilhaft, weil die Vakuumpumpe bei Schwachlastbetrieb in der Regel eine ungenügende Saugleistung aufweist. Das im Zusatzkondensator 48 niedergeschlagene Kondensat wird in den Hauptkondensator zurückgeführt; in der dafür vorgesehenen Leitung ist infolge des Druckunterschiedes zwischen Zusatzkondensator 48 und Kondensationsraum 4 der Siphon 50 angeordnet.

In der soeben beschriebenen Betriebsphase enthalten die Rohrbündel 5 indes weiterhin Luftfelder, in denen das entstehende Kondensat mit Sauerstoff angereichert wird, weil die Saugkapazität immer noch nicht ausreicht. Infolgedessen bedarf es einer Nachentgasung, die im Sammelgefäss vorgenommen wird. Ist der Kondensator mit Rieseleinbauten 32 versehen, so kann die Nachentgasung darin auf die bereits erwähnte Methode erfolgen, und der für die Aufheizung benötigte Dampf wird über die Dampfleitung 43 in den Entgasungsraum 44 und unterhalb der Rieseleinbauten 32 geleitet. Vorzugsweise wird hierfür der Abdampf der Speisepumpen-Antriebsturbine oder Anzapfdampf verwendet.

Als beste Lösung gilt indessen zur Nachentgasung das Einführen von Frischdampf oder Anzapfdampf über die Dampfzufuhrleitung 37, die ggfs. anlässlich der Erstentgasung zu Dampfeinführungszwecken benützt wurde.

Zwecks Bildung kleiner Dampfblasen wird auch diese Leitung 37 an ihrer Mündung mit Düsen oder Lochrohren versehen sein. Damit das in der Entgasungskammer sich bildende Dampfpolster nicht zu schnell in den Kondensationsraum 4 entweicht, ist an der Mündung der Dampfausgleichleitung 29 die Blende 30 angeordnet.

Es ist zweckmässig, dass die Nachentgasung mittels Frisch- oder Anzapfdampf bis zu etwa 30 bis 40 % der Last in Betrieb bleibt, solange also, bis die Vakuumpumpe 47 von selbst fähig ist, Luftansammlungen zu vermeiden. Bei schlechten Kondensatorkonzepten allerdings, die auch im normalen Lastbetrieb Zonen mit unvermeidlichen Lufttaschen aufweisen, wird man um einen permanenten Nachentgasungsbetrieb nicht herumkommen. Dass die hierfür benötigte Dampfmenge nicht für die Entspannung in der Turbine oder für die Vorwärmung zur Verfügung steht, sei nur nebenbei erwähnt.

Vorausgesetzt, es handelt sich um ein gutes Kondensatorkonzept, so ist beim inzwischen angenommenen normalen Lastbetrieb also die Dampfzufuhr über die Leitung 37 abgeschaltet. Ebenso ausser Betrieb sind selbstverständlich die Rezirkulationsleitung 39, dann die Stickstoffleitungen 38 resp. 51 sowie das Nebenkühlwasser 49. Bereits weiter vorn wurde als vorteilhaft angeführt, dass oberhalb einer gewissen Schwachlast auch der Vakuumentgaser 19 abgeschaltet ist.

Ein weiterer Vorteil der Schaltung zeigt sich beim Normalbetrieb nunmehr in der Tatsache, dass der Inhalt des Kaltkondensatbehälters 14 einer kontinuierlichen Reinigung unterzogen werden kann. Hierzu bietet sich der bestehende Kreislauf - Behälter 14, Kaltkondensatleitung 16, Kondensator 3, Kondensatpumpe 8, Kondensatoreinigungsanlage 9, Kondensatrückführung 24 - geradezu an. Da ohnehin etwa 1 % der Zirkulationsmenge ständig ersetzt werden muss, ist es vorteilhaft, diese Menge in der Kaltkondensatleitung 16 auf beispielsweise 6 % zu erhöhen und etwa 5 des durch die Kondensatreinigungsanlage 9 strömenden Wassers vor dem Hotwellregelventil durch die Rückführung 24 wieder abzuziehen.

## Patentansprüche

1. Dampfkraftanlage, die im Hauptkreis im wesentlichen aus Dampferzeuger (1), Turbine (2), Kondensator (3), Kondensatreinigungsanlage (9), Niederdruck- und Hochdruckvorwärmer (11, 13) und den erforderlichen Zirkulationspumpen (8, 12) besteht, und bei der eine Rezirkulationsleitung (39) zwischen dem letzten Hochdruckvorwärmer (13) und der Isolierarmatur (40) abzweigt, in der zum Reinigen und Entgasen des Kondensates/Speisewassers bei gefüllter Vorwärmerstrasse das Kondensat bei geschlossener Dampferzeuger-Isolierarmatur (40) mehrmals über die Rezirkulationsleitung (39) zurück zum Kondensatsammelgefäss und zur Kondensatreinigungsanlage (9) strömt, gekennzeichnet durch folgende Massnahmen: x unterhalb des Wasserspiegels (7) im Kondensatsammelgefäss (6) wird das in der Rezirkulationsleitung (39) strömende Speisewasser, welches durch mehrfachen Umlauf durch die Energieaufnahme in der Speisewasserpumpe (12) über die Sättigungstemperatur im Kondensatsammelgefäss (6) aufgeheizt ist, und welches in einem Drosselorgan (42) in der Rezirkulationsleitung (39) entspannt und verdampft ist, über Sprühdüsen in das Kondensat eingeführt, steigt darin hoch und bildet in der Entgasungskammer (44), welche vom Kondensationsraum (4) durch einen Zwischenboden (28) getrennt ist, unter Verdrängung der darin befindlichen Luft ein Polster, welches der Sauerstoff-Entgasung förderlich ist;

b) der sich in der Entgasungskammer (44) sammelnde Dampf wird zusammen mit der verdrängten Luft über eine Dampfausgleichsleitung (29) in den Kondensationsraum (4) gefördert, und von dort über die Entlüftungsleitungen (46) abgezogen und in einem Zusatzkondensator (48) niedergeschlagen, welcher in der Entlüftungsleitung vor der Vakuumpumpe (47) angeordnet ist und mit einem Nebenkühlwasser (49) beaufschlagt ist.

2. Dampfkraftanlage nach Anspruch 1, dadurch gekennzeichnet, dass anschliessend an die Aufnahme der Dampferzeugung und während der Schwachlastperiode im Sammelgefäss (6) eine Nachentgasung des Kondensates mittels Dampf durchgeführt wird, wobei das Kondensat aus dem Kondensationsraum (4) über ein Siphon (31) in das Sammelgefäss (6) einströmt.

3. Dampfkraftanlage nach Anspruch 2, dadurch gekennzeichnet, dass der Dampf zur Nachentgasung Anzapfdampf oder Abdampf der Speisepumpen-Antriebsturbine ist, der in die Entgasungskammer (44) und dort durch Rieseleinbauten (32) geleitet wird, durch welche das Kondensat herabtropft.

4. Dampfkraftanlage nach Anspruch 2, dadurch gekennzeichnet, dass der Dampf zur Nachentgasung Frischdampf oder Anzapfdampf ist, der über eine Dampfzufuhrleitung (37) wie an sich bekannt in das Kondensat unterhalb des Wasserspiegels (7) eingeleitet wird.

5. Dampfkraftanlage nach Anspruch 1, dadurch gekennzeichnet, dass das Nebenkühlwasser (49) im Zusetzkondensator (48) eine tiefere Temperatur aufweist, als das für den Kondensator (3) bestimmte Hauptkühlwasser.

**Claims**

1. Steam power station installation, which, in the main cycle, consists essentially of a steam generator (1), turbine (2), condenser (3), condensate cleaning plant (9), low pressure and high pressure preheaters (11, 13) and the necessary circulating pumps (8, 12), and in which a recirculation pipe (39) branches off between the last high pressure preheater (13) and the isolating valve (40), in which, in order to clean and degas the condensate/feed water with the preheater line filled, the condensate flows several times via the recirculation pipe (39) back to the condensate receiver and to the condensate cleaning plant (9) with the steam generator isolating valve (40) closed, characterised by the following measures:

a) the feed water which flows into the recirculation pipe (39), which is heated by multiple circulation - because of the energy taken up in the feed water pump (12) - to above the saturation temperature in the condensate receiver (6) and which is expanded and evaporated in a throttle element (42) in the recirculation pipe (39), is introduced via spray nozzles into the condensate below the water level (7) in the condensate receiver (6), rises through the condensate and, in the degassing chamber (44) which is separated from the condensation space (4) by an intermediate floor (28), forms a buffer by displacing the air located there, this buffer being necessary for oxygen degassing;

b) the steam collecting in the degassing chamber (44) is pumped, together with the displaced air, via a steam balance pipe (29) into the condensation space (4), and is extracted from there via the de-aeration pipe (46) and condensed in an additional condenser (48), which is located in the de-aeration pipe before the vacuum pump (47) and is subjected to auxiliary cooling water (49).

2. Steam power station installation according to Claim 1, characterised in that subsequent to the acceptance of steam generation and during the low load period, extra degassing of the condensate is carried out by means of steam in the receiver (6), the condensate flowing into the receiver (6) from the condensation space (4) via a syphon (31).

3. Steam power station installation according to Claim 2, characterised in that the steam for extra degassing is tapped steam or exhaust steam from the feed pump drive turbine, which steam is led into the degassing chamber (44) and through drip units (32) in the latter with the condensate trickling down through the drip units.

4. Steam power station installation according to Claim 2, characterised in that the steam for extra degassing is fresh steam or tapped steam which is introduced into the condensate below the water level (7) via a steam supply pipe (37), in a manner known per se.

5. Steam power station installation according to Claim 1, characterised in that the auxiliary cooling water (49) in the additional condenser (48) has a lower temperature than the main cooling water intended for the condenser (3).

**Revendications**

1. Centrale thermique qui, dans son circuit principal, comprend essentiellement un générateur de vapeur (1), des turbines (2), un condenseur (3), une installation d'épuration de condensat (9), des réchauffeurs à basse pression et à haute pression (11, 13) et les pompes de circulation nécessaires (8, 12), et pour laquelle, entre le dernier réchauffeur à haute pression (13) et la vanne d'isolement (40), est branchée une conduite de recyclage (39) dans laquelle, pour l'épuration et le dégazage du condensat/eau d'alimentation, lorsque la section des réchauffeurs est remplie, le condensat s'écoule, lorsque la vanne d'isolement (40) du générateur de vapeur est fermée, plusieurs fois par la conduite de recyclage (39) en retour vers le réservoir collecteur de condensat et vers l'installation d'épuration de condensat (9), caractérisée par les mesures suivantes:

a) en dessous du niveau de l'eau (7) dans le réservoir collecteur de condensat (6), l'eau d'alimentation qui s'écoule dans la conduite de recyclage (39), qui est chauffée au-dessus de la température de saturation dans le réservoir collecteur de condensat (6) par des passages répétés, par l'absorption d'énergie dans la pompe à eau d'alimentation (12) et qui est détendue et évaporée dans un étrangleur (42) dans la conduite de recyclage (39), est introduite par des ajutages de pulvérisation dans le condensat, monte dans ce condensat et forme dans la chambre de dégazage (44) qui est séparée de la chambre de condensation (4) par un fond intermédiaire (28), en refoulant l'air qui s'y trouve, un matelas qui est utile pour l'élimination de l'oxygène,

b) la vapeur qui s'accumule dans la chambre de dégazage (44) est refoulée en compagnie de l'air expulsé par une conduite d'égalisation pour la vapeur (29) dans la chambre de condensation (4) d'où elle est extraite par les conduites d'évacuation d'air (46) et est condensée dans un condenseur auxiliaire (48) qui est installé dans la conduite d'évacuation d'air en amont de la pompe à vide (47) et est alimenté au moyen d'une eau de refroidissement secondaire (49).

2. Centrale thermique suivant la revendication 1, caractérisée en ce qu'après le début de la production de vapeur et pendant la période de charge faible, un postdégazage du condensat au moyen de vapeur est effectué dans le réservoir collecteur (6), le condensat qui provient de la chambre de condensation (4) pénétrant dans ce réservoir collecteur (6) par l'intermédiaire d'un siphon (31).

3. Centrale thermique suivant la revendication 2, caractérisée en ce que la vapeur pour le postdégazage est de la vapeur d'échappement ou de la vapeur de soutirage de la turbine d'entraînement des pompes d'alimentation qui est introduite dans la chambre de dégazage (44) et qui, dans cette chambre, passe par des dispositifs à ruissellement (32) par lesquels le condensat s'écoule goutte à goutte.

4. Centrale thermique suivant la revendication 2, caractérisée en ce que la vapeur pour le postdégazage est de la vapeur fraîche ou de la vapeur de soutirage, qui est introduite par une conduite d'amenée de vapeur (37) d'une manière bien connue dans le condensat en dessous du niveau de l'eau (7).

5. Centrale thermique suivant la revendication 1, caractérisée en ce que l'eau de refroidissement secondaire (49) dans le condenseur auxiliaire (48) présente une température inférieure à celle de l'eau de refroidissement principale prévue pour le condenseur (3).